**Europäisches Patentamt**

**European Patent Office**

**Office européen des brevets**

(19)

(11) Numéro de publication : **0 599 707 A1**

(12)
# DEMANDE DE BREVET EUROPEEN

(21) Numéro de dépôt : **93402811.9**

(22) Date de dépôt : **19.11.93**

(51) Int. Cl.⁵ : **G06F 15/40**

(30) Priorité : **20.11.92 FR 9213988**

(43) Date de publication de la demande :
**01.06.94 Bulletin 94/22**

(84) Etats contractants désignés :
**DE ES FR GB IT**

(71) Demandeur : **BULL S.A.**
**Tour BULL,**
**1, place Carpeaux**
**F-92800 Puteaux (FR)**

(72) Inventeur : **Andres, Frédéric**
**17bis, boulevard Pasteur**
**F-75015 Paris (FR)**

(74) Mandataire : **Debay, Yves**
**BULL S.A.**
**Tour BULL Cédex 74**
**PC/TB2803**
**F-92039 Paris La Défense (FR)**

(54) **Méthode d'extraction de profils de statistiques, utilisation des statistiques créées par la méthode.**

(57)    La présente invention concerne une méthode d'extraction de profils de statistiques d'une base de données relationnelle organisée en relation, attribut, lesdits profils étant rangés dans des tables (210, 220) incluses dans la base de données (21, 22), caractérisée en ce qu'elle comporte :

une étape de sélection d'un objet cible entre les possibilités de choisir comme objet, une colonne d'une table, toutes les colonnes d'une table, toutes les tables ou une sélection particulière ;

une étape de production des profils de statistiques.

FIG.1

**EP 0 599 707 A1**

La présente invention concerne une méthode d'extraction de profils de statistiques d'une base de données relationnelle et l'utilisation des statistiques créées par la méthode.

Les bases de données relationnelles sont réputées pour leur intérêt par rapport aux bases de données hiérarchiques. Toutefois, pour certaines applications et en fonction de la façon dont la base de données a été conçue, les temps de réponse ou tout autre performance peuvent être jugés insuffisants. Il convient donc soit d'adapter le système informatique pour obtenir des temps de réponse suffisants, soit de modifier la structure de la base de données ou bien les requêtes formulées. Pour permettre de déterminer les influences réciproques des modifications de structures du système informatique ou de la base de données ou encore de la façon de formuler les requêtes, on a précédemment décrit dans une demande de brevet antérieure, publiée sous le numéro 2 674 651, un dispositif perfectionné d'évaluation de performance qui faisait appel à un ensemble de bibliothèques, d'architectures, de systèmes, de méthodes d'accès et enfin de profils de base de données. Ces bibliothèques étant nécessaires pour effectuer cette évaluation de performance de la base de données, c'est-à-dire pour évaluer le temps de réponse à une requête.

La présente invention concerne plus particulièrement une méthode d'extraction de profils de statistiques qui constituent la bibliothèque de profils de base de données utilisée dans ce dispositif d'évaluation de performance.

Un premier but de l'invention est donc de proposer une méthode d'extraction de profils de statistiques d'une base de données qui ne soit pas consommatrice d'un excès de temps, ou de place mémoire pour mémoriser le résultat.

Ce but est atteint par le fait que la méthode d'extraction de profils de statistique d'une base de données relationnelle organisée en relation attribut index, lesdits profils étant rangés dans des tables incluses dans la base de données, et caractérisée en ce qu'elle comporte :
une étape de sélection d'un objet cible entre les possibilités de choisir comme objet, une colonne d'une table, toutes les colonnes d'une table, toutes les tables, ou une sélection particulière, une colonne d'une table représentant un attribut ;
une étape de production des profils de statistiques.

Un autre but est de fournir une méthode d'extraction de profils qui puisse s'adapter à toute sorte de données quelque soit son type.

Ce but est atteint par le fait que la méthode comporte dans l'étape de génération des profils, soit une étape de génération des statistiques de distribution des valeurs (statistiques logique), soit une étape de génération des statistiques de placement des valeurs (statistique physique).

Selon une autre particularité, l'étape de génération des statistiques de distribution des valeurs comporte une étape de vérification des corrélations pour trouver les dépendances mathématiques ;
une étape de vérification des distributions pour déterminer si la distribution des données est uniforme ou non uniforme ;
et une étape de production des statistiques.

Selon une autre particularité, si la distribution des données est non uniforme, l'étape de vérification des distributions comporte une étape de vérification du type des données pour déterminer si les données sont du type alphabétique, alphanumérique ou numérique et produire les statistiques dans une forme correspondant aux types.

Selon une autre particularité, la structure statistique correspondant au type alphabétique non uniforme est un histogramme à hauteur constante, ainsi qu'une table contenant les profils de la relation et de l'attribut ainsi que les valeurs minimale et maximale.

Selon une autre particularité, la forme correspondant au type numérique est, selon le type de valeur, soit un histogramme à hauteur constante, soit un moment. Une table contient les profils de la relation et de l'attribut ainsi que ses valeurs minimale et maximale.

Selon une autre particularité, la forme correspondant au type alphabétique uniforme est une table contenant les profils de relation et d'attribut incluant ses valeurs minimale et maximale.

Selon une autre particularité, l'étape de génération des statistiques de placement des valeurs produit des statistiques sous une forme d'histogramme à hauteur constante.

Selon une autre particularité, les profils sont rangés respectivement dans :
une table de profil de relation contenant les statistiques sur les relations ;
une table de profil d'attribut contenant les statistiques d'attributs ;
une table de profil d'index contenant les statistiques sur les index ;
trois tables contenant les statistiques sur des attributs dont les valeurs suivent des distributions uniformes ;
deux tables contenant des statistiques sous forme de moment sur des attributs dont les valeurs suivent des distributions non-uniformes ;
trois tables contenant des statistiques sous forme d'histogramme à hauteur constante sur des attributs dont les valeurs suivent des distributions non uniforme ;
une table contenant les statistiques sous forme d'histogramme à largeur constante sur des attributs (pour une visualisation traditionnelle des statistiques ;
sept tables qui contiennent des statistiques sur des attributs corrélés.

Un autre but de l'invention est de proposer une utilisation des statistiques créées par la méthode ci-dessus. Ce but est atteint par le fait que l'utilisation des statistiques créées par la méthode d'extraction de profils de statistiques d'une base de données relationnelle, dans laquelle les relations ont des attributs, consiste :

à accéder au profil de statistiques de l'attribut d'une relation sélectionnée ;

si le profil statistique existe, à comparer le taux de confiance du profil au taux de confiance souhaité par l'utilisateur dans l'évaluation du coût d'une requête posée à la base de données ;

dans le cas où le profil statistique n'existe pas ou bien dans le cas où le taux de confiance est inférieur au taux de confiance souhaité, la méthode d'extraction est appliquée à l'attribut de la relation sélectionnée, pour générer le profil de statistique ;

à stocker le profil de statistique satisfaisant le taux de confiance dans la bibliothèque de profils de la base de données en vue de son utilisation par un dispositif adaptable d'évaluation de performance.

D'autres particularités et avantages de la présente invention apparaîtront plus clairement à la lecture de la description ci-après faite en référence aux dessins annexés dans lesquels :

- la figure 1 représente une vue schématique d'un dispositif d'extraction de profils de statistiques disposé entre une base de données et un évaluateur de performance ;
- la figure 2 représente l'organigramme du programme du dispositif et d'extraction de profils de statistiques pour l'évaluation de la distribution des statistiques ;
- la figure 3 représente l'organigramme du programme d'extraction de profils de statistiques en ce qui concerne le placement des données ;

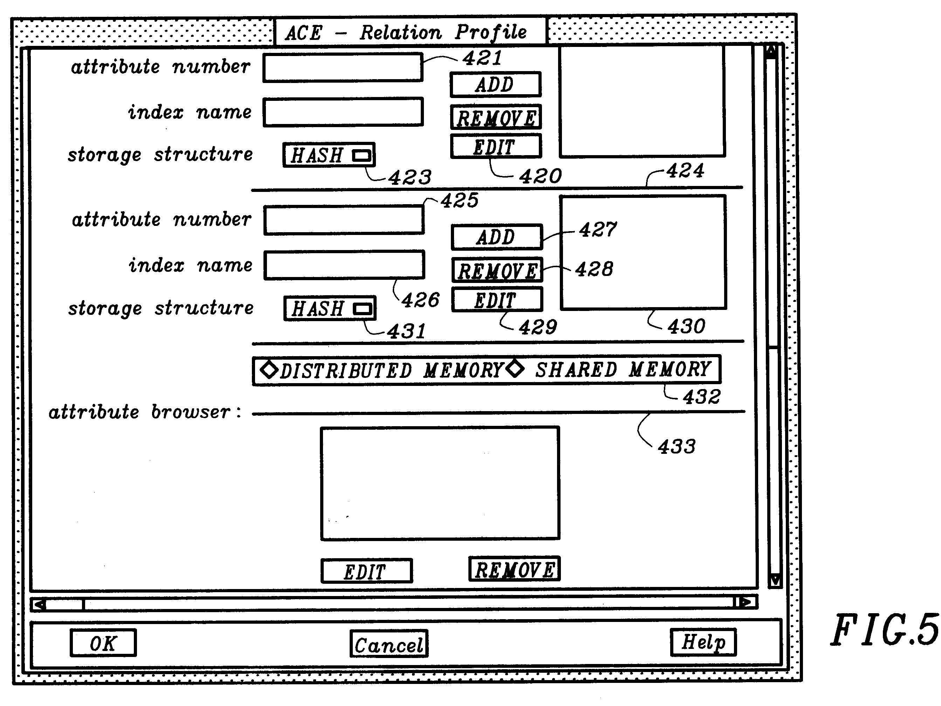

- les figures 4 et 5 représentent une fenêtre de présentation à l'écran du système informatique des informations concernant la relation sur lequel le profil est effectué ;
- la figure 6 représente une fenêtre concernant les attributs de la relation sur laquelle le profil est évalué.

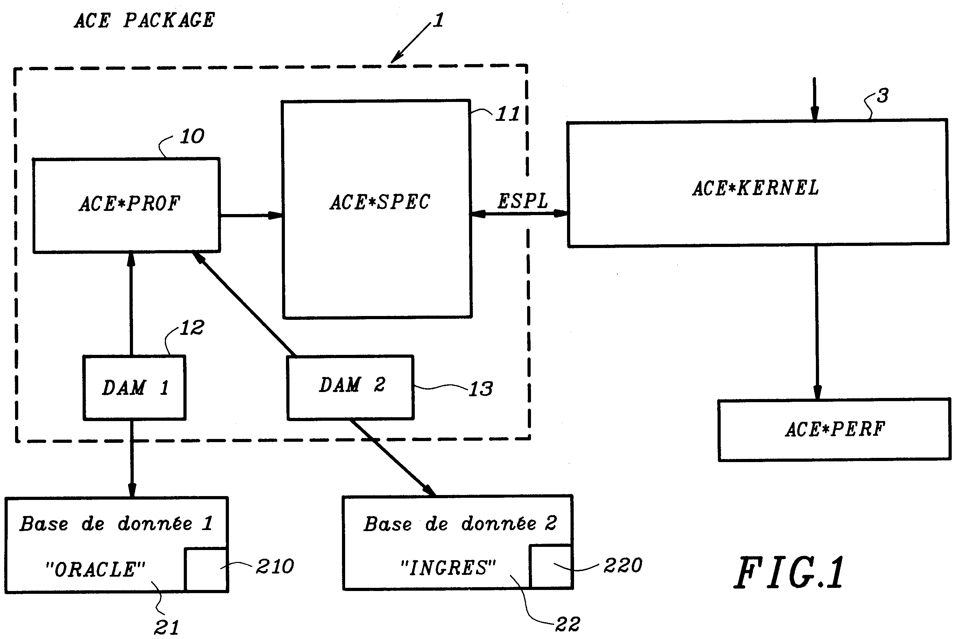

La figure 1 représente un système informatique utilisant un évaluateur de coût (3) qui reçoit des informations d'un ensemble (1) destiné à extraire des profils de statistiques de base de données (21, 22). Une base de données (21) du type relationnel peut être par exemple du type "ORACLE", alors qu'une autre base de données (22) peut être du type "INGRES". Chaque base de données communique avec le module (10) d'extraction de profils à travers une interface (12) qui est un gestionnaire d'acquisition de données adapté à la base de données. De cette façon, le module (10) d'extraction de profils dispose d'interfaces (12) aptes à travailler avec les bases de données actuelles et son utilisation est universelle et flexible. Le dispositif (3) d'évaluation de coût et de performance est du type de celui décrit dans la demande de brevet PCT/92/09057 ou encore dans la demande de brevet français 91.03915 rendue publique le 2 Octobre 1992, sous le numéro 2 674 651. Ce type de dispositif fait appel à un ensemble de bibliothèques dont une est constituée d'une bibliothèque de profils de statistiques. L'objet de l'invention concerne principalement le dispositif permettant d'élaborer la bibliothèque de profils de statistiques et la méthode utilisée par ce dispositif. Le dispositif (10) est constitué d'un programme exécuté par un système informatique pour permettre l'élaboration du profil de statistiques, alors que le dispositif (11) est constitué d'un programme exécuté par un système informatique pour permettre la présentation à l'écran du système des informations concernant le profil de la relation et le profil des attributs de la relation.

Le programme (10), après avoir élaboré les profils de statistiques, créé dans la base de données (21, respectivement 22) sur laquelle il travaille des tables respectivement (210, 220) dans lesquelles il range les statistiques. Ces tables sont constituées par une table profil de relation (REL-PROF) qui contient les statistiques sur les relations, une table profil d'attribut (ATT-PROF) qui contient les statistiques sur les attributs, une table profil d'index (IND-PROF) qui contient les statistiques sur les index, trois tables uniforme-entier (UNIF-INT), uniforme-décimale (UNIF-FLO), uniforme-chaîne (UNIF-STR), ces trois tables contenant les statistiques sur les attributs dont les valeurs suivent des distributions uniformes.

Deux tables moment-entier (MOM-INT), moment-décimaux (MOM-FLO) qui contiennent les statistiques dans des attributs dont les valeurs suivent une distribution non uniforme, trois tables histo-entier (HIST-INT), histo-décimal (HIST-FLO), histo-chaîne (HIST-STR) qui contiennent les statistiques sous forme d'histogramme à hauteur constante sur les attributs dont les valeurs suivent des distributions non uniformes, une table longueur-histo (LENG-HIST) qui contient les statistiques des attributs sous forme d'histogramme à largeur constante (pour affichage aux utilisateurs), et enfin, sept tables histogramme multidimensionnel (MULT-HIST), table entier (INT-TAB), table des décimaux (FLO-TAB), table des chaînes (STR-TAB), table-date (DAT-TAB), histogramme des relations (REL-MHIST), histogramme des attributs (ATT-MHIST) qui contiennent des statistiques sur des attributs multiples.

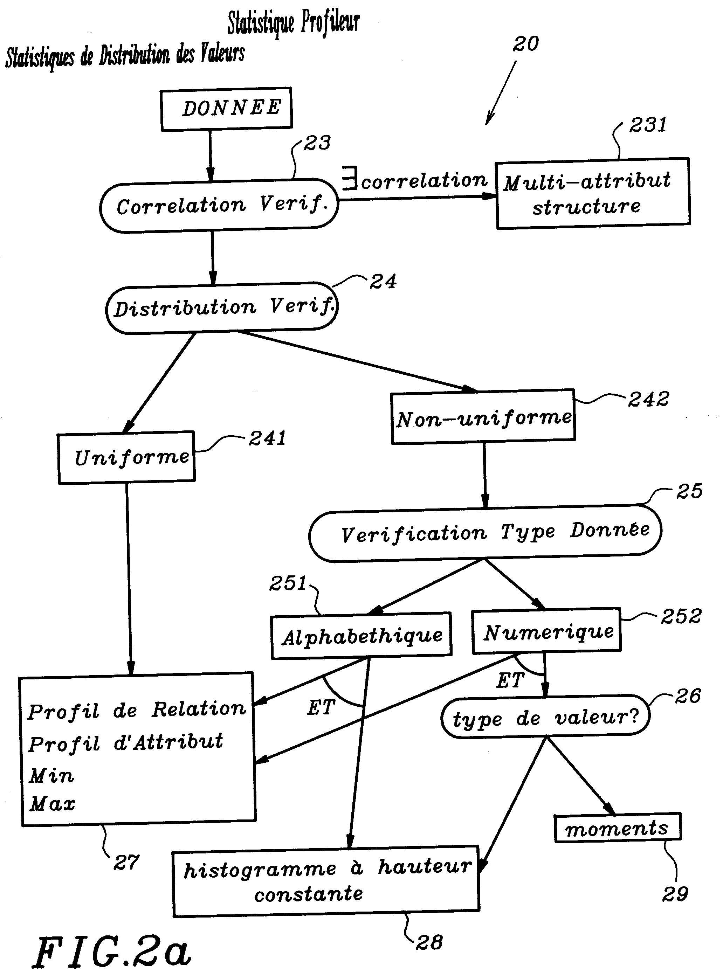

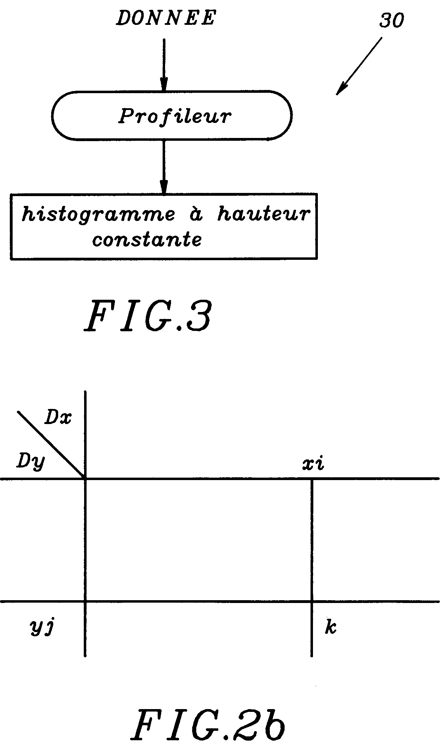

Le logiciel (10) élabore également des statistiques permettant soit de calculer la sélectivité logique, soit la sélectivité physique des données. Ces statistiques font appel dans le cas de la sélectivité logique aux statistiques de distribution des valeurs (VDS) qui sont élaborées selon l'organigramme (20) de la figure 2, et dans le cas de la sélectivité physique aux statistiques du placement des données (DPS). Ces statistiques sur le placement des données permettent d'élaborer la sélectivité physique et correspondent à l'organigramme (30) de la figure 3. Pour les statistiques de placement des données, le programme d'extraction de profils extrait des données, des histogrammes à hauteur constante comme on peut le représenter à la figure 3. Dans le cas des statistiques permettant d'évaluer la sélectivité logique, le programme d'extraction de profils de statistiques suit l'organigramme de la figure 2. Dans ce cas, le programme effectue d'abord à l'étape (23) une vérification de corrélation pour voir s'il y a corrélation ou non entre attributs.

Cette vérification de corrélation s'effectue par une mesure de corrélation basée sur l'entropie des distributions (notée H).

soit deux attributs X et Y dont les domaines de valeur sont respectivement Dx et Dy. La question a résoudre est : Y a-t'il corrélation entre les valeurs Dx et celles de Dy ?

Dx et Dy par rapport aux données de l'application peuvent se classer comme représenté à la figure 2B.

où K est le nombre de tuples tel que l'attribut X prenne la valeur xi et tel que l'attribut Y prenne la valeur yj.

$$H(x) = -\sum_j p_i \ln p_i \text{ où } p_i = \frac{N_i}{N}$$

Ni est le nombre de tuples pour la ieme valeur du domaine Dx, N est le nombre total de tuples.

ln = logarithme népérien

$$H(Y) = -\sum_j p_j \ln p_j$$

$$H(Y/X) = -\sum_{ij} p_{ij} \ln \frac{p_{ij}}{p_i}$$

le coefficient U de dépendance entre X et Y vaut :

$$U(Y/X) = \frac{H(Y) - H(Y/X)}{H(Y)}$$

Le système évalue H(X), H(Y), H(Y/X) puis U(Y/X) pour déterminer la corrélation de la façon suivante :
si U (Y/X) = 0    X et Y n'ont aucune dépendance.
si U(Y/X) = 1    Y et X sont complètement dépendants.

S'il existe des corrélations, on a à faire à une structure de données à plusieurs attributs et dans ce cas le programme à l'étape (231) représente ces corrélations sous forme de structures d'histogrammes multidimensionnels à hauteur constante. Dans le cas où il n'y a pas de corrélation, le programme passe à l'étape suivante (24) qui est une étape de vérification de la distribution pour vérifier si la distribution est uniforme ou non uniforme.

Le contrôle des distributions se base sur le test du $\chi^2$

soit Ni le nombre de tuples observés pour une valeur donnée d'un attribut, ni le nombre de tuples attendu suivant la distribution recherchée (distribution binomiale, distribution exponentielle, distribution normale)

$$\chi^2 = \sum_i \left( \frac{N_i - n_i}{n_i} \right)^2$$

Si $\chi^2$ est grand alors cela signifie que les valeurs d'attribut ne suivent pas la distribution recherchée. Si $\chi^2 = 0$, cela signifie que les valeurs d'attributs suivent exactement la distribution envisagée.

Dans le cas d'une distribution uniforme (241), le programme passe à une étape (27) de représentation du profil de relation, du profil d'attribut, des minimums et des maximums. Dans le cas où la distribution est non uniforme (242), le programme passe à une étape de vérification du type de données (25) et vérifie à l'étape (251) si les données sont alphabétiques pour élaborer un profil de relation ou un profil d'attribut contenant les valeurs minimales et maximales, comme représenté à l'étape (27), puis élaborer un histogramme à hauteur constante comme représenté à l'étape (28). Dans le cas où le programme détermine que le type de données est numérique à l'étape (252), il élabore un profil de relation ou d'attribut par ces valeurs minimales et maximales, comme représenté à l'étape (27), puis il effectue une recherche sur le type de valeur, comme représenté à l'étape (26). Dans ce cas, le programme élabore le profil soit sous forme d'un histogramme à hauteur constante représenté par l'étape (28), soit sous forme de moment d'ordre i comme représenté à l'étape (29).

Un moment d'ordre i est égal à la somme des valeurs d'un attribut spécifique Y élevé à la puissance i mi = $\Sigma\, Y^i$.

Ainsi en appliquant comme décrit ci-dessus cette méthode d'extraction de statistiques aux données de la base de données, le dispositif (10) extrait les tables constituant la bibliothèque de profil de la base de données. Cette bibliothèque de profil permettant de déterminer un taux de confiance des statistiques extraites de la base de données. Le taux d'erreur propagé par le profil de statistique doit être inférieur au taux de confiance souhaité pour les évaluations. Ainsi, le programme d'évaluation (3) utilisera les statistiques stockées dans la bibliothèque (210, 220) dans la mesure où le taux d'erreur de ces statistiques est inférieur au taux de confiance souhaité et si ces statistiques ne nécessitent pas une mise à jour. Dans le cas contraire, le programme d'extraction de profils sera exécuté pour mettre à jour les statistiques, soit parce que le taux d'erreur est inférieur au taux de confiance souhaité, soit parce que la base de données a été mise à jour et que par conséquent les statistiques ne sont plus fiables.

En effet le taux de confiance est de 100 % pour un profil venant d'être crée ou mis à jour. Toutes modifications sur la base de données réelle entrainent une réduction de ce taux de confiance. Ceci est du aux conséquences des modifications (insertion, mise à jour, suppression) sur les statistiques de chaque attribut, notamment sur la distribution.

L'intérêt des extractions faites par ce module (10) extracteur de profils est d'avoir un profil suffisamment représentatif qui puisse être utilisé dans l'évaluateur de performance sans pour autant générer des temps de calcul trop importants. Ceci permet à partir des profils de statistiques d'évaluer soit le coût d'une requête en fonction d'une architecture donnée, soit de rechercher l'architecture optimale pour que le coût de requête de type donné soit minimal et ainsi de suite. Dans son utilisation du profil, le programme d'évaluation exécute les étapes suivantes : accès au profil de statistiques concernant l'attribut d'une relation donnée ;

si le profil de statistiques existe, comparaison du taux de confiance avec le taux de confiance requis ;

dans le cas où les profils de statistiques n'existent pas ou bien si le taux de confiance est plus bas que le taux de confiance requis, lancement du programme d'extraction de profils sur l'attribut de la relation donnée ;

lancement du programme d'évaluation de performance à la fin de la génération du profil de statistiques.

Le programme (10) d'évaluation du profil de statistiques est associé à un module de représentation (11) qui permet de représenter à l'écran de la machine sur lequel les évaluations et les profils sont extraits les informations principales sur le profil de relation et le profil des attributs.

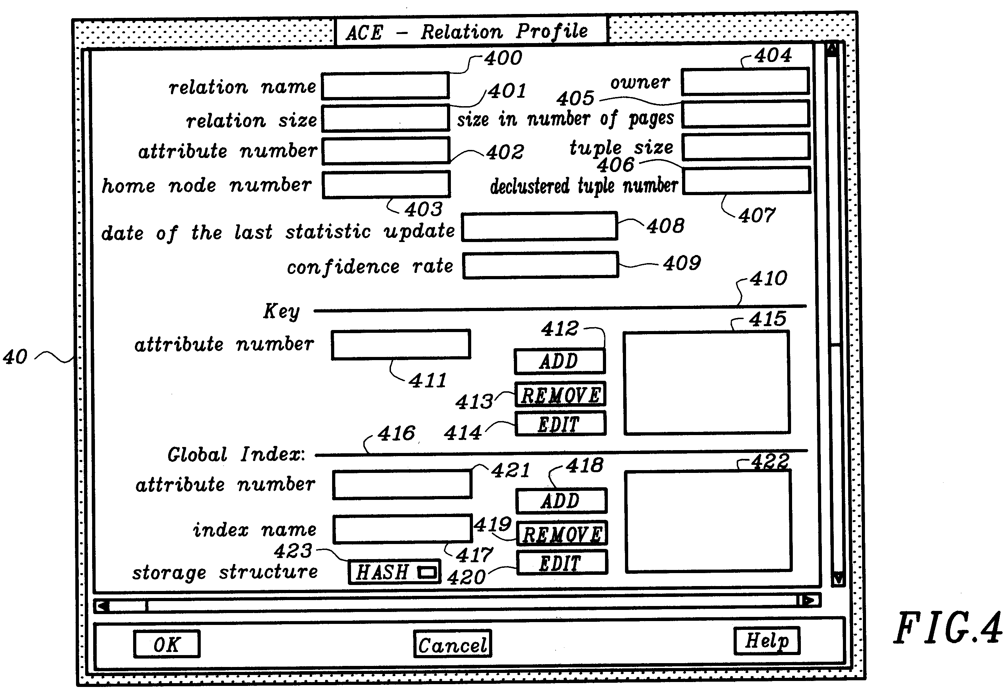

La figure 4 représente le profil d'une relation élaboré par le logiciel. Ce profil est affiché par le module (11) sous forme d'une fenêtre (40) comportant un pavé d'affichage (400) permettant d'afficher le nom de la relation ; un pavé d'affichage (401) pour afficher la taille de la relation ; un pavé d'affichage (402) permettant d'afficher le numéro d'attribut ; un pavé d'affichage (403) pour afficher le numéro d'origine ; un pavé d'affichage (404) permettant d'afficher le nom du propriétaire ; un pavé (405) pour afficher la taille en nombre de page ; un pavé (406) permettant d'afficher la taille des tuples ; un pavé (407) pour afficher le numéro de tuple décomposé en paquets ; un pavé (408) permettant d'afficher la date de la dernière mise à jour de la statistique élaborée par le programme (10) ; un pavé (409) permettant d'afficher le taux de confiance de cette statistique. Une ligne d'affichage (410) permet de rentrer le rang de l'attribut qui est clé pour une relation ; un pavé d'affichage (411) permet d'afficher le numéro d'attribut et trois boutons de commande (412, 413, 414) permettent de réaliser respectivement les fonctions addition, enlève ou efface et édite sur l'affichage du pavé (415). Une ligne d'affichage (416) d'un index global permet d'accéder directement à une donnée ; un pavé d'affichage (421) d'un numéro d'attribut ; un pavé d'affichage (417) du nom d'un index et trois fonctions ajoute, enlève, édite, accessibles respectivement par trois boutons de commande (418, 419, 420), ces fonctions permettant d'agir sur l'affichage d'un pavé (422), constituent également l'affichage de la fenêtre profil de relation (40).

Un bouton de commande (423) permet d'associer une structure de stockage à l'index global précédemment défini ; deux structures sont possible, soit une structure par calcul d'adresse (ou hash), soit une structure en b-arbre (b-tree).

Les pavés d'affichage (423, 431) sont des pavés à menu-déroulant permettant d'effectuer la sélection entre une structure de stockage à algorithme de calcul d'adresse ou à structure en arbre.

Une ligne (424) permet d'entrer un index local, un pavé (425) permet de définir le numéro d'attribut, un autre pavé (426) permet de définir un nom d'index, trois fonctions ajoute (427), enlève (428) et édite (429) permettent de modifier l'affichage d'un pavé (430) et un bouton de commande (431) permet d'associer une structure de stockage à cet index : 2 structures sont disponibles, soit un algorithme de calcul d'adresse, soit une structure en arbre. Enfin, un pavé (432) permet de définir le type d'environnement cible pour l'évaluation, à savoir si la mémoire est distribuée ou partagée, et une ligne (433) permet de faire un balayage d'attribut et de visualiser leur profil respectif.

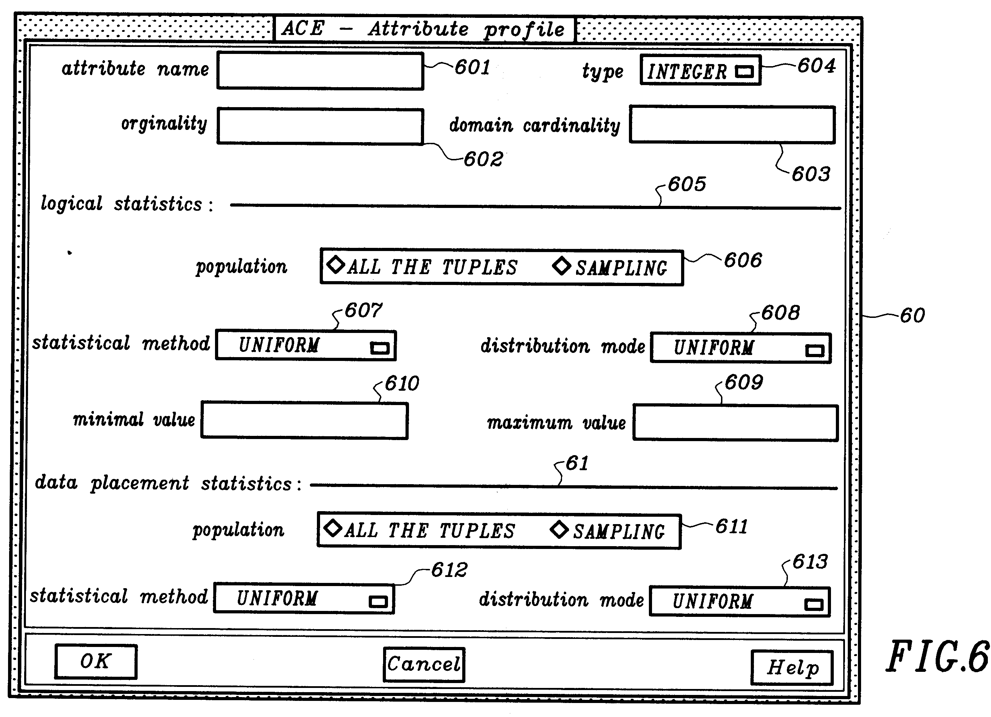

La figure 6 permet de définir ou d'afficher les profils des attributs en affichant dans une fenêtre (60) un pavé (601) permettant de définir le nom de l'attribut, un pavé (602) permettant de définir son originalité, un pavé (603) permettant de définir le nombre de valeurs prises par le domaine et un bouton d'affichage (604) permettant d'indiquer le type d'attribut, à savoir si c'est un entier. Une ligne d'affichage (605) permet de définir les statistiques logiques, et un pavé d'affichage (606) permet d'indiquer la population sur laquelle le profil est effectué. Ce pavé (606) affiche que le profil est effectué soit sur tous les tuples, soit sur un échantillonnage, ceci de façon à réduire le coût d'accès aux données. Un pavé (607) permet de sélectionner le type de méthode statistique, par exemple une méthode uniforme, un pavé (608) permet de définir le mode de distribution des attributs, par exemple un mode uniforme, un pavé (610) affiche la valeur minimale de l'attribut, et un pavé (609) affiche la valeur maximale. Une ligne (614) permet d'indiquer les statistiques sur le placement des données et un pavé (611) permet d'indiquer si ces statistiques ont été effectuées sur tous les tuples ou simplement sur un échantillonnage. Un pavé (612) indique la méthode de statistique utilisée, par exemple uniforme et un pavé (613) indique par exemple le mode de distribution uniforme.

Les pavés (607, 612) à menu-déroulant permettent de sélectionner une méthode de traitement des statistiques entre la méthode uniforme, la méthode par histogramme, la méthode basée sur des histogrammes multidimensionnels et la méthode basée sur les moments.

Les pavés (608, 613) à menu-déroulant permettent de sélectionner ou de visualiser un mode de distribution des données entre le mode uniforme, non uniforme, distribution selon une loi de poisson ou selon une loi normale.

D'autres modifications à la portée de l'homme de métier font également partie de l'esprit de l'invention.

## Revendications

1. Méthode d'extraction de profils de statistiques d'une base de données relationnelle organisée en relation, attribut, lesdits profils étant rangés dans des tables (210, 220) incluses dans la base de données (21, 22), caractérisée en ce qu'elle comporte:

    une étape de sélection d'un objet cible entre les possibilités de choisir comme objet, une colonne d'une table, toutes les colonnes d'une table, toutes les tables ou une sélection particulière ;

    une étape de production des profils de statistiques.

2. Méthode selon la revendication 1, caractérisée en ce que l'étape de génération des profils de statistiques comporte :

    soit une étape de génération des statistiques de distribution des valeurs (20);

    soit une étape de génération des statistiques de placement des valeurs (30).

3. Méthode selon la revendication 2, caractérisée en ce que l'étape de génération des statistiques de distribution des valeurs (20) comporte :

    une étape (23) de vérification des corrélations pour trouver les dépendances mathématiques ;

    une étape (24) de vérification des distributions pour déterminer si la distribution des données est uniforme ou non uniforme ;

    une étape de production des statistiques.

4. Méthode selon la revendication 3, caractérisée en ce que si la distribution des données est non uniforme, l'étape de vérification des distributions comporte :

    une étape ( 25) de vérification du type des données pour déterminer si les données sont du type alphabétique, alphanumérique ou numérique pour produire les statistiques dans une forme correspondant aux types.

5. Méthode selon la revendication 4, caractérisée en ce que la structure statistique correspondant au type alphabétique non uniforme est :

    un histogramme à hauteur constante (28) ;

    une table (27) contenant les profils de la relation et de l'attribut en valeurs minimales et maximales.

6. Méthode selon la revendication 4, caractérisé en ce que la forme correspondant au type numérique (252) est, selon le type de valeur :

    soit un histogramme à hauteur constante (28);

    soit un moment (29).

    et une table (27) contenant les profils de la relation de l'attribut en valeurs minimale et maximale.

7. Méthode selon la revendication 3, caractérisé en ce que la forme correspondant au type alphabétique uniforme (251) est une table contenant les profils de relation et d'attribut incluant les valeurs minimales et maximales.

8. Méthode selon la revendication 2, caractérisée en ce que l'étape (30) de génération des statistiques de placement des valeurs produit des statistiques sous forme d'histogrammes à hauteur constante.

9. Méthode selon une des revendications précédentes, caractérisée en ce que les profils sont rangés respectivement dans :

    une table de profil de relation contenant les statistiques sur les relations (REL-PROF) ;

    une table de profil d'attribut contenant les statistiques d'attributs (ATT-PROF) ;

    une table de profil d'index contenant les statistiques sur les index (IND-PROF) ;

    trois tables (uniform-int, uniform-float, uniform-string) contenant les statistiques sur des attributs dont les valeurs suivent des distributions uniformes ;

    deux tables (moment-int, moment-float) contenant les statistiques sur des attributs dont les valeurs suivent des distributions non-uniformes ;

    trois tables (histo-int, histo-float, histo-string) contenant les statistiques sous forme d'histogrammes à hauteur constante sur des attributs dont les valeurs suivent des distributions non-uniformes ;

une table (length-histo) contenant les statistiques sous forme d'histogrammes à largeur constante sur des attributs pour faciliter la visualisation des statistiques;

sept tables (multi-hist, int-table, float-table, string-table, date-table, rel-mhist, att-mhist) qui contiennent des statistiques pour les attributs corrélés.

10. Utilisation des statistiques créées par la méthode d'extraction de profils de statistiques d'une base de données relationnelle dans laquelle les relations ont des attributs, selon une des revendications précédentes consistant :

à accéder au profil de statistique de l'attribut d'une relation sélectionnée ;

si le profil statistique existe, à comparer le taux de confiance du profil au taux de confiance souhaité par l'utilisateur dans l'évaluation du coût d'une requête posée à la base de données par un dispositif d'évaluation de performance ;

dans le cas où le profil statistique n'existe pas ou bien dans le cas où le taux de confiance est inférieur au taux de confiance souhaité, la méthode d'extraction est appliquée à l'attribut de la relation sélectionnée, pour générer le profil de statistique ;

à stocker le profil de statistique satisfaisant le taux de confiance dans la bibliothèque (210, 220) de profils de la base de données en vue de son utilisation par un dispositif adaptable d'évaluation de performance.

ACE PACKAGE

FIG.1

EP 0 599 707 A1

*Statistique Profileur*

*Statistiques de Distribution des Valeurs*

FIG.2a

DONNEE

30

Profileur

histogramme à hauteur constante

FIG.3

Dx

Dy

xi

yj

k

FIG.2b

*FIG.4*

ACE – Relation Profile

relation name — 400

relation size — 401
owner — 405
404

attribute number — 402
size in number of pages
tuple size — 406

home node number — 403
declustered tuple number — 407

date of the last statistic update — 408

confidence rate — 409

410

Key — 415

attribute number — 411

ADD — 412
REMOVE — 413
EDIT — 414

Global Index: — 422

attribute number — 416

ADD — 421
REMOVE — 419
EDIT — 420

index name — 417
418

storage structure — 423
HASH

OK     Cancel     Help

40

11

EP 0 599 707 A1

*FIG.5*

FIG.6

Office européen
des brevets

**RAPPORT DE RECHERCHE EUROPEENNE**

Numero de la demande

EP 93 40 2811

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | ACM COMPUTING SURVEYS, vol. 20, no. 3 , Septembre 1988 , USA pages 191 - 221 MANNINO M., CHU P., SAGER T. 'Statistical Profile Estimation in Database Systems' --- | 1-10 | G06F15/40 |
| D,A | WO-A-92 17843 (BULL S.A.) * le document en entier * & FR-A-2 674 651 (BULL S.A.) ----- | 1-10 | |

**DOMAINES TECHNIQUES RECHERCHES (Int.Cl.5)**

G06F

Le présent rapport a été établi pour toutes les revendications

| Lieu de la recherche | Date d'achèvement de la recherche | Examinateur |
|---|---|---|
| LA HAYE | 16 Décembre 1993 | Suendermann, R |